# EUROPÄISCHE PATENTSCHRIFT

(11) **EP 2 631 966 B1**
(45) Veröffentlichungstag und Bekanntmachung des Hinweises auf die Patenterteilung: **23.07.2014**
(21) Anmeldenummer: 13156337.1
(22) Anmeldetag: 22.02.2013
(51) Int. Cl.: F28F 3/02, F28F 1/22, H01M 10/613, H01M 10/615, H01M 10/625, H01M 10/6551, H01M 10/6556, H01M 10/6568, H01M 10/659, H01M 2/10

(54) **Fluiddurchströmtes Temperierelement und Traktionsbatterie mit gehäuseintegriertem fluiddurchströmten Temperierelement**
Tempering element with fluid flowing through it and traction battery with housing-integrated tempering element with fluid flowing through it
Elément de thermorégulation traversé par un fluide et batterie de traction dotée d'un élément de thermorégulation traversé par un fluide intégré au boîtier

(30) Priorität: 24.02.2012 DE 102012202841
(43) Veröffentlichungstag der Anmeldung: 28.08.2013
(73) Patentinhaber: Lisa Dräxlmaier GmbH, 84137 Vilsbiburg (DE)
(72) Erfinder: Deser, Stefan, 84137 Vilsbiburg (DE); Kotzbauer, Thomas, 84036 Landshut (DE); Römelsberger, Florian, 84144 Geisenhausen (DE)

(56) Entgegenhaltungen:
- EP-A1- 1 117 138
- DE-A1-102009 058 809
- DE-A1-102010 013 025
- US-A1- 2006 132 101

## Beschreibung

### TECHNISCHES GEBIET

Die Erfindung betrifft ein fluiddurchströmtes Temperierelement in Sandwich-Bauweise und die Verwendung eines derartigen Temperierelementes im Gehäuseaufbau einer Traktionsbatterie.

### STAND DER TECHNIK

Es ist prinzipiell bekannt, dass es beim Einsatz von Traktionsbatterien zu einer Erwärmung der elektrochemischen Zellen kommen kann, die es erforderlich macht definiert zu Kühlen, um eine Schädigung der Zellen oder gar der diese umgebenden Bauteile zu vermeiden.

Gleichzeitig ist es bekannt, dass die Leistungsfähigkeit der elektrochemischen Zellen abhängig von der Temperatur der Zellen ist, so dass es bei der Verwendung in Traktionsbatterien von Elektro- oder Hybridfahrzeugen abhängig von den jeweils herrschenden Umgebungstemperaturen notwendig sein kann, die Zellen aktiv zu kühlen oder aber auch zu erwärmen, um diese in ihrem optimalen Betriebsbereich zu nutzen.

Im Stand der Technik sind vielfältige Lösungen bekannt, um in oder benachbart zu einzelnen Zellen oder Gruppen von Zellen Kühlvorrichtungen vorzusehen.

Grundsätzlich ist es auch bekannt die Bodenplatte eines Akkumulators als Wärmetauscher dergestalt aufzubauen, dass diese Kühlkanäle aufweist, durch die ein Temperierfluid bewegt werden kann.

Die in Fig. 1 dargestellte und in der deutschen Patentanmeldung DE 10 2008 059 954 A1 offenbarte Lösung umfasst ein Temperierelement 10 mit einer ersten Kontaktfläche 11. An der Kontaktfläche 11 wird eine Temperierfluidleitung 14 mit einem Fluideinlass 141 und einem Fluidauslass 142 angeordnet. Die Temperierfluidleitung 14 ist mäandernd ausgestaltet. Um eine effektive Kühlung der ersten Kontaktfläche 11 zu erreichen, ist die Temperierfluidleitung 14 in eine Vielzahl von Schlaufen gelegt, die relativ eng beabstandet sind.

Die Befestigung der Temperierfluidleitung 14 an der Kontaktfläche 11 erfolgt über mehrere linear verlaufende Befestigungselemente 145a-145d, die wellenförmig so gestaltet sind, dass diese die Temperierfluidleitung 14 über die Länge der ersten Kontaktfläche 11 mehrfach so umgreifen, dass die Temperierfluidleitung 14 in den Zwischenräumen der Wellen der Befestigungselemente 145a-145d angeordnet ist und mit der Kontaktfläche 11 verbunden wird. Nachteilig an dieser Ausgestaltung ist, dass die Temperierfluidleitung 14 relativ lang und mit vielen Schlaufen ausgebildet werden muss, was sowohl einen hohen Material-, als auch einen hohen Fertigungsaufwand nach sich zieht. Gleichzeitig müssen die Befestigungselemente 145a-145d an einer Vielzahl von Kontaktpunkten mit der Kontaktfläche 11 verbunden werden, um die Temperierfluidleitung 14 relativ zur Kontaktfläche 11 zu befestigen.

Zusätzlich bietet die Ausgestaltung der Befestigungselemente 145a-145d keinen ausreichenden Schutz der Temperierfluidleitung 14 vor mechanischen Schäden, so dass hierfür weitere Bauteile vorgesehen werden müssen.

In der Patentanmeldung DE102009058809 A1 ist ebenfalls ein Temperierelement für eine Batterie offenbart.

### ZUSAMMENFASSUNG DER ERFINDUNG

Aufgabe der vorliegenden Erfindung ist es, eine fluiddurchströmte Temperiervorrichtung zu schaffen, die besonders leicht ist und aus wenigen Bauteilen besteht, wobei beipielsweise die Temperiervorrichtung als Teil des Gehäuses einer Traktionsbatterie verwendet werden kann.

Die Aufgaben werden durch ein Temperierelement mit der Kombination der Merkmale des Anspruchs 1 und eine ein derartiges Temperierelement aufweisende Traktionsbatterie mit den Merkmalen des Anspruchs 10 gelöst. Ein Herstellverfahren für ein erfindungsgemäßes Temperierelement beschreibt die Kombination der Schritte in Anspruch 11. Vorteilhafte Ausführungen und Anwendungen finden sich in den Unteransprüchen, der Beschreibung und den Figuren.

Erfindungsgemäß besteht ein Temperierelement aus einer ersten im Wesentlichen ebenen Kontaktfläche, innerhalb derer ein Temperierbereich angeordnet ist.

Dem Temperierbereich der Kontaktfläche werden benachbart Bauteile angeordnet, die über das Temperierelement erwärmt und/oder gekühlt werden sollen.

Bei der ersten Kontaktfläche handelt es sich vorzugsweise um ein Blech, insbesondere aus Aluminium. Alternativ sind aber auch andere Materialien, wie Kunststoff in kompakter oder poröser, beispielsweise geschäumter oder gesinterter Form, denkbar, aus denen ein plattenförmiger, im Wesentlichen ebener Körper mit den benötigten mechanischen und wärmeleitenden Eigenschaften geformt werden kann.

Unter im Wesentlichen eben wird hier verstanden, dass das Blech, wenn überhaupt, nur sehr gering in eine dritte Raumrichtung verformt ist. Beispielsweise könnte der Temperierbereich in Bezug auf den Rest der ersten Kontaktfläche leicht hervorgehoben sein, oder der Temperierbereich könnte mehrere geringfügig zurückgesetzte Flächen aufweisen, die beispielsweise eine Seite einer oder mehrerer benachbarter Bauteile, wie beispielsweise elektrochemischer Zellen einer Traktionsbatterie, umschließen.

Weiterhin umfasst ein erfindungsgemäßes Temperierelement eine Stützstruktur. Diese weist einen Querschnitt auf, der sich aus mehreren abwechselnden Stegen und Sicken zusammensetzt. Eine derartige Querschnittsform ermöglicht eine erhebliche Steigerung der mechanischen Stabilität des Temperierelements bei gleichzeitig relativ geringem Gewicht.

Unter einer Sicke im erfindungsgemäßen Sinn wird eine rinnenförmige Vertiefung in der Stützstruktur verstanden, wobei sich die rinnenförmige Vertiefung von einer ersten Seite zu einer, bevorzugt gegenüberliegenden, zweiten Seite der Stützstruktur erstreckt.

Die Stützstruktur weist mehrere parallel verlaufende Sicken auf. Die Sicken werden getrennt durch zwischen diesen verlaufende, nicht vertiefte Bereiche, die hier als Steg bzw. Stege bezeichnet werden.

Die Stützstruktur kann auf einer oder zwei gegenüberliegenden Seiten Sicken und Stege aufweisen.

Innerhalb der Stützstruktur können die Stege und Sicken die Stützstruktur linear oder ein- oder mehrfach gekrümmt oder geknickt durchlaufen.

Die Stützstruktur kann zur weiteren Gewichtseinsparung auch in den Sicken oder Stegen angeordnete definierte Materialaussparungen aufweisen.

Innerhalb der Stützstruktur ist eine rohrförmige Temperierfluidleitung angeordnet. Die Temperierfluidleitung weist einen Fluideinlass und einen Fluidauslass auf, so dass in Verbindung mit einem geeigneten Fluidkreislauf ein Temperierfluid durch die Temperierfluidleitung strömen kann.

Die Temperierfluidleitung kann ein Metall- oder ein, vorzugsweise zumindest bereichsweise flexibles, Kunststoffrohr sein. Die Temperierfluidleitung kann ein- oder mehrteilig sein. Ein Abschnitt oder ein Teil der Temperierfluidleitung kann so vorgeformt sein, dass dieser dem Verlauf einer Sicke in einer Stützstruktur folgt.

Bei dem Temperierfluid kann es sich um ein Gas und/oder eine Flüssigkeit handeln, bevorzugt handelt es sich um ein Wasser-Glykol-Gemisch.

Die Stützstruktur ist erfindungsgemäß flächig ausgestaltet und zumindest im Temperierbereich über einen oder mehrere, vorzugsweise alle, Stege mit der Rückseite der ersten Kontaktfläche verbunden.

Unter einer flächigen Ausgestaltung der Stützstruktur wird verstanden, dass die Stützstruktur zumindest an alle Seiten eines Temperierbereichs angrenzt oder über die Ränder des Temperierbereichs hinaus verläuft. Dabei ist die Stützstruktur so gestaltet, dass diese auf die erste Kontaktfläche wirkende Kräfte aufnimmt, möglichst ohne dass die rohrförmige Temperierfluidleitung mechanisch beansprucht wird. In anderen Worten verbessert die Stützstruktur zumindest im Temperierbereich die Tragfähigkeit der ersten Kontaktfläche, da die Stützstruktur ein großes Flächenträgheitsmoment aufweist.

Die Stützstruktur kann einteilig oder mehrteilig aus aneinander angrenzenden Stützstrukturteilen aufgebaut sein.

Bei einer mehrteiligen Ausgestaltung der Stützstruktur können die mehreren Teile jeweils korrespondierende Verbindungsbereiche aufweisen.

Vorzugsweise werden mehrere Stützstrukturteile durch das Einlegen einer Temperierfluidleitung miteinander verbunden.

Wenn mehrere benachbarte Stützstrukturteile vorgesehen sind, können diese im Hinblick auf den Verlauf der Stege respektive Sicken gleichsinnig, d. h. parallel oder aber auch in einem Winkel zueinander angeordnet werden.

In Bezug auf die Ränder des Temperierbereichs können die Stege und Sicken der Stützstruktur parallel oder in einem Winkel verlaufen.

Vorteilhaft ist es, wenn die rohrförmige Temperierfluidleitung innerhalb der Sicken der Stützstruktur angeordnet ist. Eine derartige Anordnung kann auf einfache Art und Weise erreicht werden, wenn die Temperierfluidleitung vor dem Verbinden der ersten Kontaktfläche mit der Stützstruktur in die Sicken der Stützstruktur eingelegt wird und hat den Vorteil, dass die rohrförmige Temperierfluidleitung im Temperierbereich, vorzugsweise über deren gesamte Länge, von der Stützstruktur umschlossen ist und derart vor einer mechanischen Beschädigung geschützt wird.

Gleichzeitig werden auf die erste Kontaktfläche wirkende Kräfte, wie beispielsweise Gewichtskräfte benachbarter Bauteile, von der Stützstruktur größtenteils aufgenommen, ohne dass eine signifikante Belastung der rohrförmigen Temperierfluidleitung erfolgt.

Die flächige Stützstruktur dient zusätzlich zur indirekten Wärmeleitung vom Temperierbereich der ersten Kontaktfläche zur rohrförmigen Temperierfluidleitung. Insbesondere, wenn die Stützstruktur aus einem gut wärmeleitenden Material besteht, ermöglicht der erfindungsgemäße Aufbau, dass lediglich in wenigen der benachbart zum Temperierbereich vorhandenen Sicken der Stützstruktur eine rohrförmige Temperierfluidleitung angeordnet werden muss und trotzdem eine ausreichende Temperierleistung des Temperierelements erzielt wird. Somit dient die Stützstruktur unter anderem auch als Wärmeverteilungselement.

In einer bevorzugten Ausführungsform ist die Stützstruktur rückseitig, an der der ersten Kontaktfläche gegenüberliegender Seite, mit einer zweiten Kontaktfläche verbunden. Hierdurch ergibt sich ein mechanisch besonders stabiler "Sandwich-Verbund", der im Vergleich zu Systemen aus dem Stand der Technik ein sehr vorteilhaftes, geringes Gewicht bei äußerst hoher Stabilität hinsichtlich Torsion und Biegung aufweist.

Vorzugsweise handelt es sich bei der Stützstruktur um ein vorgeformtes Wellblech und/oder ein Trapezblech. Derartige Formbleche sind über bekannte Verfahren, wie beispielsweise Rollformer, als Halbzeug herstellbar und zeichnen sich durch hohe Steifigkeit und Tragfähigkeit aus.

Besonders bevorzugt ist die Stützstruktur aus einem Well- und/oder Trapezblech hergestellt, das aus Aluminium besteht. Neben einem geringen Gewicht weisen Bleche aus Aluminium auch eine relativ hohe Wärmeleitfähigkeit auf. Dies hat den Vorteil, dass die über die rohrförmige Temperierfluidleitung zu- oder abgeführte Wärme auch indirekt vermehrt über die Stützstruktur dem Temperierbereich in der ersten Kontaktfläche zugeführt bzw. entzogen werden kann.

Eine vorteilhafte Ausführungsform ergibt sich, wenn die Sicken eine Querschnittsform aufweisen, die zumindest abschnittsweise mit dem Außenquerschnitt der rohrförmigen Temperierfluidleitung korrespondiert. Eine derartige Ausführung hat ebenfalls Vorteile im Hinblick auf die indirekt über die Stützstruktur dem Temperierbereich in der ersten Kontaktfläche zu- oder abgeführten Wärmemengen, da insbesondere die direkte Wärmeleitung zwischen der Temperierfluidleitung und der Stützstruktur über die größeren Kontaktflächen wirksamer gestaltet werden kann.

Bevorzugt ist es ebenfalls, wenn die Sicken zumindest bereichsweise so gestaltet sind, dass die rohrförmige Temperierfluidleitung in den Sicken form- oder kraftschlüssig gehalten ist. Dies hat insbesondere Vorteile bei der Herstellung des Temperierelements, da die rohrförmige Temperierfluidleitung ohne zusätzliche Hilfsmittel in der Stützstruktur positioniert und fixiert werden kann. Eine besonders bevorzugte Ausführungsvariante ergibt sich, wenn die Temperierfluidleitung in den Sicken verrastet werden kann.

In einer besonders bevorzugten Ausführungsvariante ist zwischen der rohrförmigen Temperierfluidleitung und der ersten Kontaktfläche und/oder der Stützstruktur ein Funktionsmittel angeordnet.

Bei dem Funktionsmittel kann es sich beispielsweise um einen Wärmeleiter handeln, der derart ausgeführt ist, dass er den Bereich zwischen der rohrförmigen Temperierfluidleitung und der ersten Kontaktfläche ausfüllt und dadurch eine wärmeleitende Verbindung zwischen diesen Elementen herstellt.

In einer besonders bevorzugten Ausführungsvariante handelt es sich bei dem Wärmeleiter um einen in seiner Formgebung korrespondierend zum Hohlraum zwischen der in einer Sicke der Stützstruktur befindlichen Temperierfluidleitung und der ersten Kontaktfläche gestalteten Einleger aus einem gut wärmeleitenden Material, beispielsweise Aluminium.

Alternativ kann es sich bei dem Wärmeleiter auch um ein in flüssigem Zustand eingegossenes Material handeln, beispielsweise einen gut wärmeleitenden Kunststoff oder ein Metall. Bevorzugt handelt es sich um ein Material, welches gleichzeitig zur Verbindung der Stützstruktur mit der ersten Kontaktfläche genutzt werden kann, wie beispielsweise um einen wärmeleitenden Haftvermittler auf Polymerbasis.

Alternativ kann es sich bei dem Funktionsmittel aber auch um einen Latentwärmespeicher aus einem Phasenwechselmaterial handeln. In einer derartigen Ausführungsvariante wäre das erfindungsgemäße Temperierelement insbesondere bei dynamischen Temperaturschwankungen geeignet, durch das Funktionsmittel Wärmespitzen zu kompensieren beziehungsweise zu puffern, indem die Energie im Latentwärmespeicher durch Phasenumwandlung aufgenommen wird und in der Folge mit zeitlicher Verzögerung über das in der Temperierfluidleitung strömende Fluid abgeführt werden kann. Entsprechend kann natürlich auch eine gewisse Wärmemenge im Latentwärmespeicher eingepuffert werden, die in der Folge mit zeitlicher Verzögerung an benachbarte Bauteile abgegeben wird, ohne dass zu diesem Zeitpunkt über das Fluid dem Temperierelement Wärme zugeführt werden muss. Beispielsweise um die Zellen einer Traktionsbatterie auf eine optimale Betriebstemperatur zu erwärmen.

Letztendlich kann es sich bei dem Funktionsmittel auch um einen Sensor handeln, beispielsweise um einen Temperatursensor, der auf einfache Art und Weise, beispielsweise vor der Verbindung von Stützstruktur und erster Kontaktfläche, benachbart zur rohrförmigen Temperierfluidleitung oder ersten Kontaktfläche angeordnet wird. Ein derartiger Temperatursensor kann zur Überwachung der benachbart zum Temperierelement befindlichen Bauteile genutzt werden und beispielsweise im Zusammenspiel mit einer elektronischen Steuerung und gegebenenfalls anderen Sensoren die Fluidparameter (Geschwindigkeit, Temperatur,...) innerhalb der Temperierfluidleitung je nach Bedarf zu variieren.

Auch eine beliebige Kombination der zuvor genannten Funktionsmittel wäre denkbar und würde abhängig von den gewählten Funktionsmitteln die Eigenschaften eines erfindungsgemäßen Temperierelements entsprechend den oben aufgezeigten Vorteilen verbessern.

Als vorteilhaft hat es sich zudem herausgestellt, wenn die erste Kontaktfläche und die Stützstruktur oder aber die erste und die zweite Kontaktfläche und die Stützstruktur stoffschlüssig miteinander verbunden werden, z. B. verschweißt, verlötet oder aber bevorzugt miteinander verklebt werden. Insbesondere die Herstellung einer Klebeverbindung ist auf einfache Art und Weise und mit nur geringem Energieaufwand darstellbar.

Wenn mit einem erfindungsgemäßen Temperierelement benachbarte Bauteile, ggf. unterschiedlich, temperiert werden sollen, hat es sich als vorteilhaft erwiesen, mehrere Kühlbereiche innerhalb der ersten Kontaktfläche des Temperierelements vorzusehen, in denen eine rohrförmige Temperaturfluidleitung angeordnet ist. Dabei ist es möglich, eine oder mehrere Temperaturfluidleitungen in einer Stützstruktur anzuordnen, die mehrere Kühlbereiche überdeckt oder aber mehrere benachbarte Stützstrukturen vorzusehen, die jeweils einem Kühlbereich zugeordnet sind und in denen jeweils eine Temperaturfluidleitung angeordnet ist.

Eine bevorzugte Ausführungsvariante eines Temperierelements weist benachbart zu einer Stützstruktur angeordnete Verbindungselemente auf. Die Verbindungselemente begrenzen die Stützstruktur seitlich oder sind in einer Aussparung der Stützstruktur angeordnet und sind so gestaltet, dass über die Verbindungselemente das Temperierelement besonders einfach an einem benachbarten Bauteil festgelegt werden kann, beispielsweise indem die Verbindungselemente Öffnungen aufweisen durch die hindurch das Temperierelement mit einem benachbarten Bauteil verschraubt werden kann.

Die Verbindungselemente können mit der Stützstruktur und/oder der ersten Kontaktfläche verbunden sein. Durch eine derartige Verbindung entsteht eine sehr stabile Struktur und eine Schädigung der Temperierfluidleitung sowie der Stützstruktur durch mechanische Einflüsse, wie z. B. Bohren, Schrauben und/oder Verspannen, kann wirksam vermieden werden.

Bei einer alternativen Ausführungsvariante sind die Verbindungselemente bereichsweise so geformt, dass sie form- und/oder kraftschlüssig in den Sicken der Stützstruktur angeordnet werden können und gegebenenfalls zusätzlich mit der ersten Kontaktfläche und/oder der Stützstruktur verklebt werden. Dies erleichtert die Montage des Temperierelements und ermöglicht die flexible Positionierung der Verbindungselemente in den Sicken der Stützstruktur.

In einer weiteren alternativen Ausführungsvariante der Erfindung sind Randbereiche der ersten Kontaktfläche beziehungsweise ersten und zweiten Kontaktfläche mit den korrespondierenden Randbereichen der Stützstruktur selbst derart verbunden, dass ein Verbindungsbereich entsteht über den das Temperierelement mit weiteren Bauteilen verbunden werden kann. Hierfür kann die Stützstruktur im Randbereich im Bereich eines Steges mit der ersten Kontaktfläche über, beispielsweise einen Haftvermittler, verbunden sein und es können entsprechende Bohrungen für Befestigungselemente, wie z. B. Schrauben, vorgesehen sein.

Entsprechend kann bei Stützstrukturen, die benachbart zu mehreren Temperierbereichen angeordnet sind, im Bereich zwischen den Temperierbereichen eine Verbindung der ersten Kontaktfläche beziehungsweise der ersten und zweiten Kontaktfläche mit den korrespondierenden Bereichen der Stützstruktur erfolgen, wobei die genannten Elemente ggf. vor dem Verbinden verformt werden, so dass ein Verbindungsbereich entsteht in dem die Elemente unmittelbar benachbart aneinander zur Anlage kommen und in dem beispielsweise Bohrungen eingebracht werden, über die weitere Bauteile mit dem Temperierelement verbunden werden können.

Bei der zuvor genannten Ausführungsform kann in der Folge auf separate Verbindungselemente verzichtet werden.

Ein bevorzugter Einsatz für ein erfindungsgemäßes Temperierelement ist eine Traktionsbatterie, die eine Gehäusewand in Form eines Temperierelements in einer der zuvor beschriebenen Ausführungsvarianten aufweist.

Ein Verfahren zur Herstellung eines erfindungsgemäßen Temperierelements, vorzugsweise zur Verwendung in einer Traktionsbatterie, umfasst in einem ersten Schritt die Erzeugung oder Bereitstellung einer flächigen Stützstruktur mit Stegen und Sicken.

Bei der Erzeugung kann beispielsweise aus einem Metallblech über einen Rollumformer eine entsprechende Struktur ausgebildet werden, die im Anschluss entsprechend den Abmessungen des Temperierelements zugeschnitten wird. Es kann aber alternativ auch eine bereits vorgeformtes Halbzeug mit Sicken und Stegen, beispielsweise ein Wellblech oder ein Trapezblech Verwendung findet, das lediglich zugeschnitten werden muss.

Alternativ kann zugeschnittenes und geformtes Material als Halbzeug bezogen werden und zur Herstellung eines erfindungsgemäßen Temperierelements bereitgestellt werden.

In einem zusätzlichen Schritt wird eine rohrförmige Temperierfluidleitung in die Stützstruktur eingelegt.

Das Einlegen der Temperierfluidleitung erfolgt vorzugsweise vorderseitig in die Sicken der Stützstruktur. Es ist aber alternativ auch denkbar, die Temperierfluidleitung rückseitig in die Sicken der Stützstruktur einzulegen. Die vorderseitige Anordnung der Temperierfluidleitung in den Sicken der Stützstruktur hat den Vorteil, dass diese rückseitig von der Stützstruktur umgeben wird und Beschädigungen der Temperierfluidleitung so besser vermieden werden können.

Ein weiterer Schritt umfasst das Auflegen einer ersten Kontaktfläche mit einem Temperierbereich auf die Stege der Stützstruktur, derart, dass die Stützstruktur flächig hinter dem Temperierbereich angeordnet ist.

In der Folge oder während des Auflegens werden die erste Kontaktfläche und die Stützstruktur miteinander verbunden, vorzugsweise über eine stoffschlüssige Verbindung wie einen Löt-, Schweiß- oder Klebeprozess. Ganz besonders bevorzugt handelt es sich um eine Verklebung.

In einer besonders bevorzugten Ausführungsvariante wird hierzu die erste Kontaktfläche rückseitig und/oder die Stützstruktur auf der der ersten Kontaktfläche zugewandten Seite vor dem Auflegen der ersten Kontaktfläche auf die Stützstruktur mit einem aktivierbaren, beispielsweise wärmeaktivierbaren, Haftvermittler versehen. Vorzugsweise geschieht dies ausschließlich im Bereich der Stege der Stützstruktur.

In einer bevorzugten Ausführungsvariante erfolgt in einem Folgeschritt die Verbindung des Verbunds aus erster Kontaktfläche und Stützstruktur mit einer zweiten Kontaktfläche, die rückseitig an der Stützstruktur, und damit auf der der ersten Kontaktfläche gegenüberliegender Seite, angeordnet wird.

Vorzugsweise erfolgt die Verbindung der zweiten Kontaktfläche mit der Stützstruktur über eine Klebeverbindung, beispielsweise in der zuvor in Bezug auf die erste Kontaktfläche beschriebenen Art und Weise.

In einer besonders bevorzugten Ausführungsvariante wird hierzu die zweite Kontaktfläche auf der der Stützstruktur zugewandten Seite oder die Stützstruktur auf der der zweiten Kontaktfläche zugewandten Seite vor dem Auflegen der zweiten Kontaktfläche auf die Stützstruktur mit einem aktivierbaren, beispielsweise wärmeaktivierbaren, Haftvermittler versehen. Vorzugsweise geschieht dies ausschließlich im Bereich der rückseitigen Stege der Stützstruktur.

In einer weiteren bevorzugten Herstellungsvariante wird vor oder nach dem Einlegen der Temperierfluidleitung in die Stützstruktur deren Außenquerschnitt so geformt, dass dieser mit der Querschnittsform der Sicken der Stützstruktur korrespondiert.

Alternativ kann auch der Querschnitt der Sicken der Stützstruktur so gestaltet werden, dass dieser mit dem Außenquerschnitt der Temperierfluidleitung korrespondiert.

Hierzu kann die Temperierfluidleitung und oder die Stützstruktur im Bereich der Sicken verformt werden.

Alternativ kann um die Temperierfluidleitung herum auch ein Funktionsmittel in Form eines Wärmeleiters derart angebracht werden (beispielsweise indem die Temperierfluidleitung mit dem Material des Wärmeleiters umspritzt wird), dass der entstehende Außenquerschnitt der mit dem Wärmeleiter zumindest bereichsweise ummantelten Temperierfluidleitung mit dem Querschnitt der Sicken der Stützstruktur korrespondiert. In einer weiter bevorzugten Ausführungsvariante wird der Wärmeleiter um die rohrförmige Temperierfluidleitung herum angeordnet, bevor diese in die Stützstruktur eingelegt wird.

### KURZE BESCHREIBUNG DER ZEICHNUNGEN

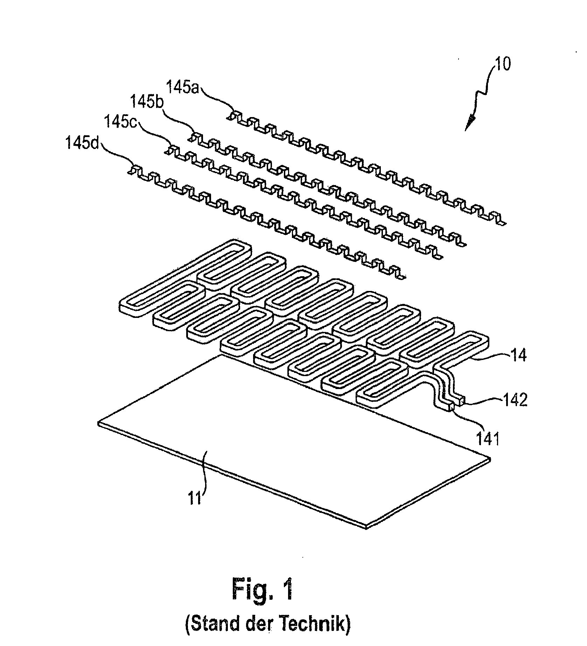

Fig. 1 zeigt eine Explosionsansicht eines Temperierelements aus dem Stand der Technik;
Fig. 2 zeigt eine perspektivische Ansicht eines erfindungsgemäßen Temperierelements;
Fig. 3 zeigt das Temperierelement aus Fig. 2 ohne einer ersten Kontaktfläche;
Fig. 4 stellt schematisch einen Ausschnitt der in Fig. 3 gezeigten Stützstruktur mit darin angeordneter Temperierfluidleitung dar;
Fig. 5 zeigt eine vorgeformte Temperierfluidleitung zur Anordnung in einer Stützstruktur;
Fig. 6 stellt einen Ausschnitt einer Traktionsbatterie mit einem gehäuseintegrierten erfindungsgemäßen Temperierelement dar;
Fig. 7a-c und e zeigen schematische Schnittansichten alternativer Ausführungsformen erfindungsgemäßer Temperierelemente; und Fig. 7d zeigt eine schematische Schnittansicht einer Ausführungsform eines Temperierelements, das nicht Teil der Erfindung ist.
Fig. 8 ist eine schematische Schnittdarstellung eines erfindungsgemäßen Temperierelements mit alternativ gestalteten Verbindungsbereichen.

### WEGE ZUR AUSFÜHRUNG DER ERFINDUNG

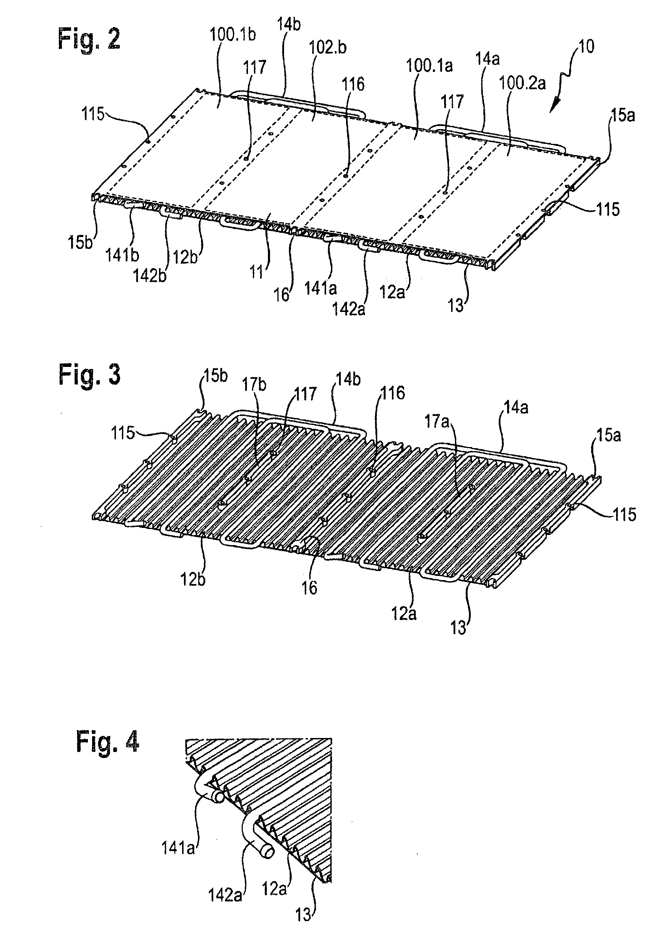

Die Fig. 2 zeigt eine perspektivische Ansicht eines erfindungsgemäßen Temperierelements 10 als Sandwichbauteil, umfassend eine erste Kontaktfläche 11, zwei nebeneinander hinter dieser Kontaktfläche 11 angeordneten Stützstrukturen 12a, 12b und eine rückseitig an den Stützstrukturen 12a, 12b angeordnete zweite Kontaktfläche 13. Innerhalb der Stützstrukturen 12a, 12b sind zwei rohrförmige Temperierfluidleitungen 14a, 14b angeordnet, die jeweils einen Fluideinlass 141a, 141b und einen Fluidauslass 142a, 142b aufweisen. In der ersten Kontaktfläche 11 befinden sich vier Temperierbereiche 100.1a, 100.2a, 100.1b, 100.2b. An zwei Enden des Temperierelements sind benachbart zu den Stützstrukturen 12a, 12b jeweils ein Verbindungselement 15a, 15b angeordnet. Ebenso ist zwischen den Stützstrukturen 12a, 12b ein Verbindungselement 16 vorgesehen. Weitere Verbindungselemente 17a, 17b (siehe Fig. 3) sind innerhalb der Stützstrukturen 12a, 12b zwischen je zwei Temperierbereichen 100.1a, 100.2a bzw. 100.1b, 100.2b vorgesehen. Die Verbindungselemente 15a, 15b, 16, 17a, 17b weisen über ihre Länge mehrere senkrecht zur Kontaktfläche 11 verlaufende Bohrungen 115, 116, 117 auf, die mit in den Kontaktflächen 11, 13 vorgesehenen Öffnungen korrespondieren und die zur Festlegung weiterer Bauelemente am Temperierelement 10, beispielsweise bei der Anordnung des Temperierelements 10 im oder am Gehäuse einer Traktionsbatterie 1, dienen.

Die Fig. 3 zeigt das bereits bezüglich Fig. 2 beschriebene Temperierelement 10 ohne der ersten Kontaktfläche 11, so dass die innerhalb und benachbart der Stützstrukturen 12a, 12b angeordneten Verbindungselemente 15a, 15b, 16, 17a, 17b, sowie die Temperierfluidleitungen 14a, 14b sichtbar sind.

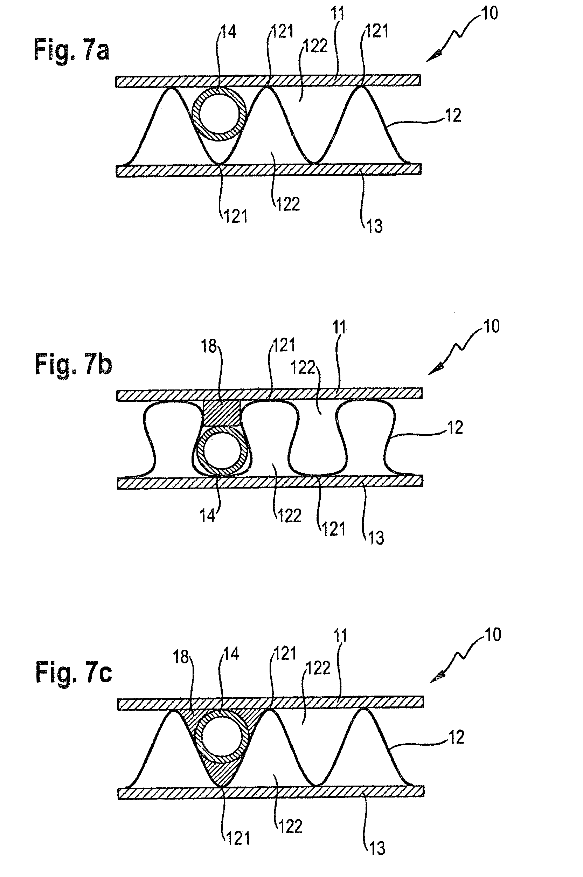

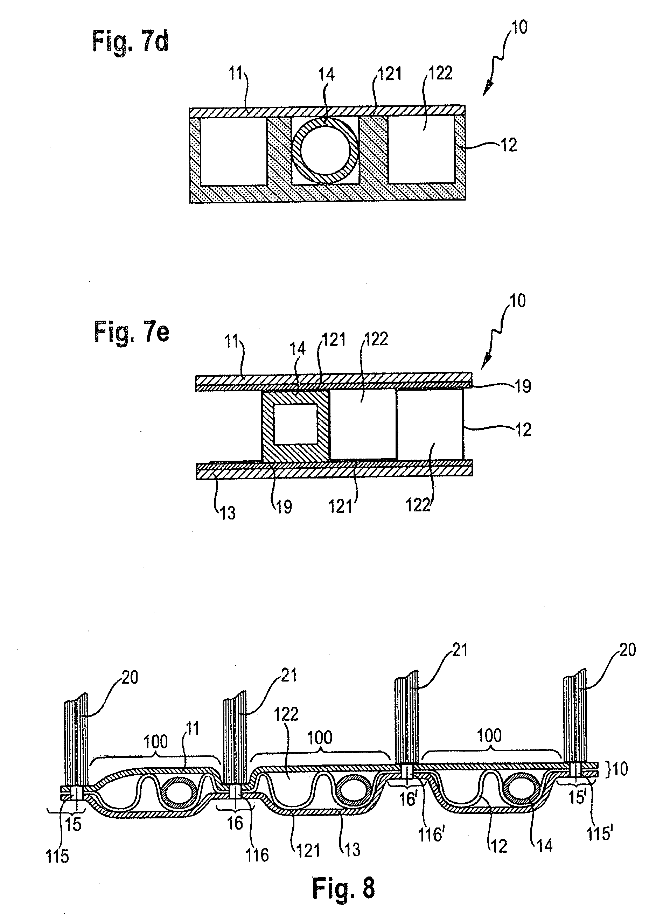

Bei den Temperierfluidleitungen 14a, 14b handelt es sich um vorgeformte Metallrohre, die einen Außenquerschnitt aufweisen, der mit dem Querschnitt der Sicken (z. B. Sicken 122 Fig. 7a-c, e) der Stützstrukturen 12a, 12b korrespondiert. Die Temperierfluidleitungen 14a, 14b sind so geformt, dass diese mehrere parallele Abschnitte aufweisen, die innerhalb der Stützstrukturen 12a, 12b angeordnet werden können.

Die Fig. 4 zeigt einen Ausschnitt einer der in Fig. 3 bereits dargestellten Stützstrukturen 12a, b mit der innerhalb dieser angeordneten Temperierfluidleitung 14a, b. Insbesondere erkennbar ist der Fluideinlass 141a, b und der Fluidauslass 142a, b über die die Temperierfluidleitung 14a, b auf einfache Art und Weise mit einem Fluidkreislauf verbunden werden kann, der weitere Elemente eines Temperierkreislaufs enthält.

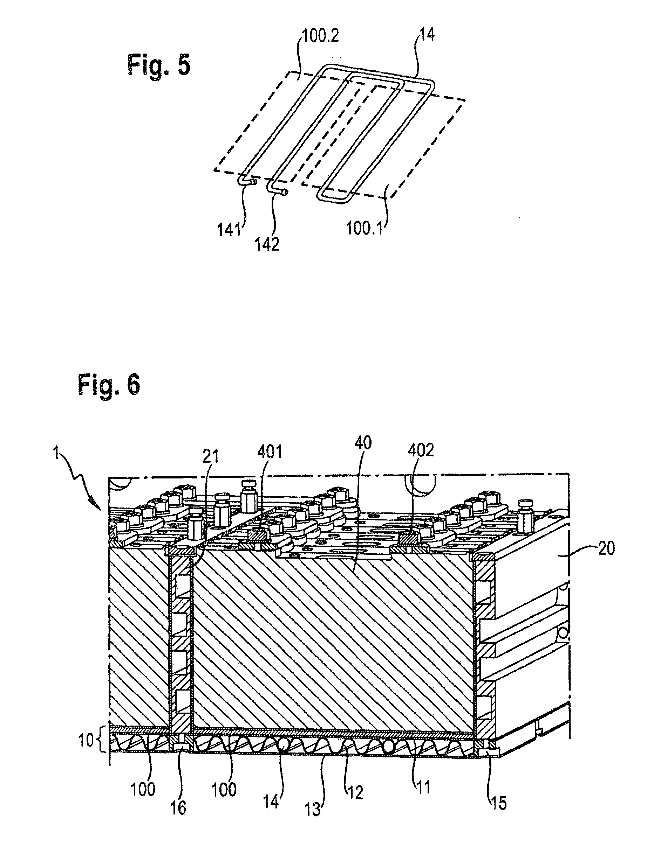

Fig. 5 zeigt eine Ausführungsvariante einer Temperierfluidleitung 14 zu dem in Fig. 2 dargestellten Temperierelement 10. Wie erkennbar sind die innerhalb der Stützstruktur angeordneten parallelen Abschnitte der Temperierfluidleitungen 14 relativ weit voneinander beabstandet. Im dargestellten Ausführungsbeispiel durchläuft die Temperierfluidleitung 14 einen Temperierbereich 100.2 lediglich zweimal und dieselbe Temperierfluidleitung 14 wird gleichzeitig zur Temperierung eines benachbarten Temperierbereichs 100.1 genutzt.

In Fig. 6 findet sich eine Darstellung eines Ausschnitts einer Traktionsbatterie 1. Das Gehäuse der Traktionsbatterie weist ein erfindungsgemäßes Temperierelement 10 und mehrere senkrecht verlaufende Gehäuseaußenwände 20, sowie die einzelnen Bereiche des Gehäuses abtrennende, identisch gestaltete Gehäuseinnenwände 21 auf. In den einzelnen Bereichen sind Stapel von elektrochemischen Zellen 40 angeordnet, wobei die den Elektroden der Zellen 401, 402 gegenüberliegende Seite der elektrochemischen Zellen 40 benachbart zum Temperierbereich 100 der ersten Kontaktfläche 11 des Temperierelements 10 zur Anlage kommt.

Die erste Kontaktfläche 11 besteht im gezeigten Ausführungsbeispiel aus einem Aluminiumblech und rückseitig ist die erste Kontaktfläche 11 mit einer Stützstruktur 12 aus einem Aluminium-Wellblech über einen Haftvermittler verbunden. Innerhalb der Stützstruktur 12 ist die rohrförmige Temperierfluidleitung 14 angeordnet. Rückseitig ist an der Stützstruktur 12 eine zweite Kontaktfläche 13 angeordnet, an der beispielsweise ein weiterer Stapel von elektrochemischen Zellen 40 zur Anlage kommen könnte.

Das Temperierelement 10 weist weiterhin Verbindungselemente 15, 16 auf, die eine feste Verschraubung des Temperierelements 10 mit den Gehäuseaußenwänden 20 bzw. Gehäuseinnenwänden 21 ermöglichen.

Die Fig. 7a-c, e zeigen schematische Schnittansichten alternativer Ausführungsformen erfindungsgemäßer Temperierelemente 10.

Fig. 7a zeigt ein Temperierelement das aus einer ersten Kontaktfläche 11 und einer zweiten Kontaktfläche 13 und einer zwischen diesen angeordneten Stützstruktur 12 besteht, wobei die Stützstruktur 12 als Wellblech ausgeführt ist. Die Stützstruktur 12 ist mit mehreren parallelen Stegen 121 und Sicken 122 auf der der ersten Kontaktfläche 11 zugewandten Seite der Stützstruktur 12 ausgebildet, sowie umgekehrt entsprechend Seitens der zweiten Kontaktfläche 13. Innerhalb den der ersten Kontaktfläche 11 zugewandten Seite der Stützstruktur 12 befindlichen Sicken 122 ist eine rohrförmige Temperierfluidleitung 14 mit rundem Querschnitt angeordnet, deren Außendurchmesser so bemessen ist, dass diese sowohl mit der Stützstruktur 12 als auch mit der ersten Kontaktfläche 11 in wärmeleitendem Kontakt ist.

Über die Stege 121 auf beiden Seiten der Stützstruktur 12 ist diese mit der ersten Kontaktfläche 11 und der zweiten Kontaktfläche 13 stoffschlüssig verbunden.

Die Fig. 7b unterscheidet sich insbesondere durch die Querschnittsform der Stege 121 beziehungsweise Sicken 122 der Stützstruktur 12. Die Stützstruktur 12 weist im Querschnitt doppel-Ω-förmige Wellen auf, so dass die rohrförmige Temperierfluidleitung 14 mit einem runden Querschnitt innerhalb der Sicken 122 der Stützstruktur 12 verrastet werden kann. Die Temperierfluidleitung 14 ist in diesem Ausführungsbeispiel im direkten wärmeleitenden Kontakt mit der zweiten Kontaktfläche 13. Um auch eine ausreichende Wärmeleitung zur ersten Kontaktfläche 11 sicherzustellen, ist zwischen der Temperierfluidleitung 14 und der ersten Kontaktfläche 11 ein Funktionselement 18 als Wärmeleiter vorgesehen. Der Wärmeleiter besteht aus einem massiven Aluminium-Rechteckprofilstab.

Die Fig. 7c zeigt ein Ausführungsbeispiel, bei dem im Gegensatz zu den zuvor beschriebenen Beispielen die Bereiche der Temperierfluidleitung 14, die innerhalb der Sicken 122 der Stützstruktur 12 angeordnet sind, mit einem Funktionselement 18 aus einem gut wärmeleitenden Material umgeben wurde, so dass der Außenquerschnitt der derart modifizierten Temperierfluidleitung 14 dem Querschnitt einer Sicke 122 der Stützstruktur 12 entspricht und damit über die gesamte Fläche der Sicke 122 eine wärmeleitende Verbindung zwischen modifizierter Temperierfluidleitung 18 und Stützstruktur 12 entsteht.

Die Fig. 7d zeigt eine weitere Ausführungsvariante eines Temperierelements 10, das nicht Teil des Erfindung ist. Das Temperierelement weist eine Stützstruktur 12 auf, die lediglich auf der der ersten Kontaktfläche 11 zugewandten Seite Sicken 122 und Stege 121 aufweist. Über die Stege 121 ist die Stützfläche 12 mit der ersten Kontaktfläche 11 verbunden. Innerhalb der Sicken 122 ist eine rohrförmige Temperierfluidleitung 14 angeordnet. Die Stützstruktur 12 ist im dargestellten Ausführungsbeispiel aus einem geschäumten Material, vorzugsweise einem offenzelligen Metallschaum, vorzugsweise aus Aluminium oder einer Aluminiumlegierung, gebildet.

Die in Fig. 7e dargestellte Ausführungsvariante weist eine Stützstruktur mit im Querschnitt rechteckigen Sicken 122 und Stegen 121 auf beiden Seiten der Stützstruktur. Die Stützstruktur ist über die beiderseits angeordneten Stege 121 mit einer ersten Kontaktfläche 11 und einer zweiten Kontaktfläche 12 stoffschlüssig verbunden. Hierzu wurden die Bleche, aus denen die erste Kontaktfläche 11 und die zweite Kontaktfläche 13 bestehen, zuvor flächig mit einem wärmeaktivierbaren Haftvermittler 19 beschichtet und der Haftvermittler 19 bei der Fertigung des Temperierelements 10 aktiviert.

Das in Fig. 8 dargestellte Temperierelement 10 zeigt mehrere Verbindungselemente 15, 16, 15', 16', die integral mit den Elementen des Sandwichbauteils (erste Kontaktfläche 11, Stützstruktur 12 mit Stegen 121 und Sicken 122, sowie zweite Kontaktfläche 13) ausgebildet sind. Die Verbindungselemente 15, 16, 15' und 16' weisen dabei Bohrungen 115, 116, 115', 116' auf, über die das Temperierelement 10 mit benachbarten Bauteilen 20, 21 verbunden werden kann, wodurch mehrere Temperierbereiche 100 entstehen. Eine derartige Ausführungsform eines Temperierelements 10 besteht aus besonders wenigen Bauteilen.

## Patentansprüche

1. Temperierelement (10), vorzugsweise für eine Traktionsbatterie, umfassend zumindest eine erste im Wesentlichen ebene Kontaktfläche (11) und einen innerhalb der ersten Kontaktfläche (11) angeordneten Temperierbereich (100), und
eine flächig ausgestaltete Stützstruktur (12), die einen Querschnitt aufweist, der aus jeweils mehreren sich abwechselnden Stegen (121) und Sicken (122) zusammengesetzt ist, wobei die Sicken (122) als rinnenförmige Vertiefungen in der Stützstruktur (12) ausgestaltet sind, wobei
innerhalb der Stützstruktur (12) eine rohrförmige Temperierfluidleitung (14) angeordnet ist
**dadurch gekennzeichnet, dass**
die Stützstruktur (12) aus einem Metallblech besteht, das zumindest im Temperierbereich (100) über einen Steg (121) mit der Rückseite der ersten Kontaktfläche (11) und rückseitig, an der der ersten Kontaktfläche (11) gegenüberliegenden Seite mit einer zweiten Kontaktfläche (13) stoffschlüssig verbunden ist.

2. Temperierelement (10) nach Anspruch 1,
**dadurch gekennzeichnet, dass**
die rohrförmige Temperierfluidleitung (14) innerhalb einer Sicke (122) der Stützstruktur angeordnet ist.

3. Temperierelement (10) nach einem der vorherigen Ansprüche,
**dadurch gekennzeichnet, dass**
es sich bei der Stützstruktur (12) um ein vorgeformtes Well- und/oder Trapezblech handelt, vorzugsweise-aus Aluminium.

4. Temperierelement (10) nach einem der vorherigen Ansprüche,
**dadurch gekennzeichnet, dass**
die Sicken (122) eine Querschnittsform aufweisen, die zumindest abschnittsweise mit dem Außenquerschnitt der rohrförmigen Temperierfluidleitung (14) korrespondiert.

5. Temperierelement (10) nach einem der vorherigen Ansprüche,
**dadurch gekennzeichnet, dass**
die Sicken (122) zumindest bereichsweise so gestaltet sind, dass die rohrförmige Temperierfluidleitung (14) in den Sicken (122) form- oder kraftschlüssig gehalten, vorzugsweise verrastet, ist.

6. Temperierelement (10) nach einem der vorherigen Ansprüche,
**dadurch gekennzeichnet, dass**
zwischen der rohrförmigen Temperierfluidleitung (14) und der ersten Kontaktfläche (11) und/oder der Stützstruktur (12) ein Funktionsmittel (18) angeordnet ist, vorzugsweise ein Wärmeleiter aus einem wärmeleitenden Material und/oder ein Latentwärmespeicher aus einem Phasenwechselmaterial und/oder ein Sensorelement.

7. Temperierelement (10) nach einem der vorherigen Ansprüche,
**dadurch gekennzeichnet, dass**
die erste Kontaktfläche (11) und/oder die zweite Kontaktfläche (13) mit der Stützstruktur (12) verklebt ist/sind.

8. Temperierelement (10) nach einem der vorherigen Ansprüche,
**dadurch gekennzeichnet, dass**
das Temperierelement (10) mehrere Temperierbereiche (100a, 100b) aufweist, in denen wenigstens eine rohrförmige Temperierfluidleitung (14, 14a, 14b) angeordnet ist.

9. Temperierelement (10) nach einem der vorherigen Ansprüche,
**dadurch gekennzeichnet, dass**
benachbart zur Stützstruktur (12, 12a, 12b) ein Verbindungselement (15, 16, 17, 17a, 17b) zum Festlegen des Temperierelements an einem benachbarten Bauteil angeordnet ist.

10. Traktionsbatterie (1), aufweisend eine Gehäusewand in Form eines Temperierelements (10) nach einem der vorherigen Ansprüche.

11. Verfahren zur Herstellung eines Temperierelements (10), vorzugsweise zur Verwendung in einer Traktionsbatterie, mit den folgenden Schritten
a. Erzeugen oder Bereitstellen einer flächigen, aus einem Metallblech bestehenden Stützstruktur (12) mit Stegen (121) und Sicken (122), wobei die Sicken (122) als rinnenförmige Vertiefungen in der Stützstruktur (12) ausgestaltet sind;
b. Einlegen einer rohrförmigen Temperierfluidleitung (14) in die Stützstruktur (12);
c. Auflegen einer ersten Kontaktfläche (11) mit einem Temperierbereich (100) auf die Stege (121) der Stützstruktur (12) derart, dass die Stützstruktur (12) flächig am Temperierbereich (100) angeordnet ist und diesen bedeckt; und
d. Stoffschlüssiges Verbinden der ersten Kontaktfläche (11) mit der ersten Stützstruktur (12);
wobei Schritt b. gleichzeitig oder zeitlich unabhängig von den Schritten c. und d. erfolgt und die Schritte c. und d. gleichzeitig oder hintereinander in dieser Reihenfolge durchgeführt werden,
e. wobei die Stützstruktur (12) auf der der ersten Kontaktfläche (11) gegenüberliegenden Seite mit einer zweiten Kontaktfläche (13) stoffschlüssig verbunden wird.

12. Verfahren nach Anspruch 11,
**dadurch gekennzeichnet, dass**
das Verbinden der Stützstruktur (12) mit der zweiten Kontaktfläche (13) mittels Kleben erfolgt.

13. Verfahren nach Anspruch 11 oder 12,
**dadurch gekennzeichnet, dass**
der Außenquerschnitt der rohrförmigen Temperierfluidleitung (14) so geformt wird, dass er zumindest abschnittsweise mit der Querschnittsform der Sicken (122) der Stützstruktur (12) korrespondiert und/oder der Querschnitt der Sicken (122) so gestaltet wird, dass dieser mit dem Außenquerschnitt der rohrförmigen Temperierfluidleitung (14) korrespondiert.

14. Verfahren nach Anspruch 11, 12 oder 13
**dadurch gekennzeichnet, dass**
in Schritt d. das Verbinden der ersten Kontaktfläche (11) mit der ersten Stützstruktur (12) als Verklebung erfolgt.

## Claims

1. Temperature-control element (10), preferably for a traction battery, comprising at least a first, substantially planar contact surface (11) and a temperature-control region (100) which is arranged within the first contact surface (11), and
a supporting structure (12) of flat configuration which has a cross section which is made up of in each case several alternating webs (121) and beads (122), wherein the beads (122) are configured as channel-like recesses in the supporting structure (12),
wherein a tubular temperature-control fluid line (14) is arranged within the supporting structure (12),
**characterized in that**
the supporting structure (12) is composed of a metal sheet which is connected to the rear face of the first contact surface (11) by means of a web (121) at least in the temperature-control region (100) and is cohesively connected to a second contact surface (13) at the rear face, on that face which is situated opposite the first contact surface (11).

2. Temperature-control element (10) according to Claim 1,
**characterized in that**
the tubular temperature-control fluid line (14) is arranged within a bead (122) of the supporting structure.

3. Temperature-control element (10) according to either of the preceding claims,
**characterized in that**
the supporting structure (12) is a pre-shaped corrugated and/or trapezoidal metal sheet, preferably composed of aluminium.

4. Temperature-control element (10) according to one of the preceding claims,
**characterized in that**
the beads (122) have a cross-sectional shape which corresponds, at least in sections, to the outside cross section of the tubular temperature-control fluid line (14).

5. Temperature-control element (10) according to one of the preceding claims,
**characterized in that**
the beads (122) are designed, at least in regions, such that the tubular temperature-control fluid line (14) is held, preferably latched, in the beads (122) in an interlocking or force-fitting manner.

6. Temperature-control element (10) according to one of the preceding claims,
**characterized in that**
a functional means (18), preferably a heat conductor which is composed of a thermally conductive material and/or a latent heat store which is composed of a phase-change material and/or a sensor element, is arranged between the tubular temperature-control fluid line (14) and the first contact surface (11) and/or the supporting structure (12).

7. Temperature-control element (10) according to one of the preceding claims,
**characterized in that**
the first contact surface (11) and/or the second contact surface (13) are/is adhesively bonded to the supporting structure (12).

8. Temperature-control element (10) according to one of the preceding claims,
**characterized in that**
the temperature-control element (10) has a plurality of temperature-control regions (100a, 100b) in which at least one tubular temperature-control fluid line (14, 14a, 14b) is arranged.

9. Temperature-control element (10) according to one of the preceding claims,
**characterized in that**
a connecting element (15, 16, 17, 17a, 17b) for securing the temperature-control element to an adjacent component is arranged adjacent to the supporting structure (12, 12a, 12b).

10. Traction battery (1) having a housing wall in the form of a temperature-control element (10) according to one of the preceding claims.

11. Method for producing a temperature-control element (10), preferably for use in a traction battery, comprising the following steps
a. generating or providing a flat supporting structure (12) which is composed of a metal sheet and has webs (121) and beads (122), wherein the beads (122) are configured as channel-like recesses in the supporting structure (12);
b. inserting a tubular temperature-control fluid line (14) into the supporting structure (12);
c. placing a first contact surface (11) with a temperature-control region (100) onto the webs (121) of the supporting structure (12) in such a way that the supporting structure (12) is arranged flat on the temperature-control region (100) and covers said temperature-control region; and
d. cohesively connecting the first contact surface (11) to the first supporting structure (12);
wherein step b. takes place at the same time as or independently of steps c. and d. with respect to time, and steps c. and d. are carried out at the same time or one after the other in this order,
e. wherein the supporting structure (12) is cohesively connected to a second contact surface (13) on that face which is opposite the first contact surface (11).

12. Method according to Claim 11,
**characterized in that**
the supporting structure (12) is connected to the second contact surface (13) by means of adhesive bonding.

13. Method according to Claim 11 or 12,
**characterized in that**
the outside cross section of the tubular temperature-control fluid line (14) is shaped such that it corresponds, at least in sections, to the cross-sectional shape of the beads (122) of the supporting structure (12), and/or the cross section of the beads (122) is designed such that said cross section corresponds to the outside cross section of the tubular temperature-control fluid line (14).

14. Method according to Claim 11, 12 or 13,
**characterized in that**
the first contact surface (11) is connected to the first supporting structure (12) in the form of an adhesive bond in step d.

## Revendications

1. Élément de thermorégulation (10), de préférence pour une batterie de traction, comprenant au moins une première surface de contact essentiellement plane (11) et une région de thermorégulation (100) disposée à l'intérieur de la première surface de contact (11), et
une structure de support (12) de configuration plate, qui présente une section transversale constituée à chaque fois de plusieurs nervures (121) et moulures (122) alternées, les moulures (122) étant configurées sous forme de renfoncements en forme de canaux dans la structure de support (12),
une conduite de fluide de thermorégulation tubulaire (14) étant disposée à l'intérieur de la structure de support (12),
**caractérisé en ce que**
la structure de support (12) se compose d'une tôle métallique qui est connectée par liaison de matière au moins dans la région de thermorégulation (100), par le biais d'une nervure (121), au côté arrière de la première surface de contact (11) et, du côté arrière, au niveau du côté opposé à la première surface de contact (11), à une deuxième surface de contact (13).

2. Élément de thermorégulation (10) selon la revendication 1,
**caractérisé en ce que**
la conduite de fluide de thermorégulation tubulaire (14) est disposée à l'intérieur d'une moulure (122) de la structure de support.

3. Élément de thermorégulation (10) selon l'une quelconque des revendications précédentes,
**caractérisé en ce que**
la structure de support (12) est une tôle ondulée et/ou trapézoïdale préformée, de préférence en aluminium.

4. Élément de thermorégulation (10) selon l'une quelconque des revendications précédentes,
**caractérisé en ce que**
les moulures (122) présentent une forme en section transversale qui correspond au moins en partie à la section transversale extérieure de la conduite de fluide de thermorégulation tubulaire (14).

5. Élément de thermorégulation (10) selon l'une quelconque des revendications précédentes,
**caractérisé en ce que**
les moulures (122) sont configurées au moins en partie de telle sorte que la conduite de fluide de thermorégulation tubulaire (14) soit retenue dans les moulures (122) par engagement par correspondance de forme ou par force, de préférence par encliquetage.

6. Élément de thermorégulation (10) selon l'une quelconque des revendications précédentes,
**caractérisé en ce**
**qu'**entre la conduite de fluide de thermorégulation tubulaire (14) et la première surface de contact (11) et/ou la structure de support (12) est disposé un moyen fonctionnel (18), de préférence un conducteur thermique constitué d'un matériau thermoconducteur et/ou un accumulateur de chaleur latente constitué d'un matériau à changement de phase et/ou un élément de capteur.

7. Élément de thermorégulation (10) selon l'une quelconque des revendications précédentes,
**caractérisé en ce que**
la première surface de contact (11) et/ou la deuxième surface de contact (13) est/sont collée(s) à la structure de support (12).

8. Élément de thermorégulation (10) selon l'une quelconque des revendications précédentes,
**caractérisé en ce que**
l'élément de thermorégulation (10) présente plusieurs régions de thermorégulation (100a, 100b) dans lesquelles est disposée au moins une conduite de fluide de thermorégulation tubulaire (14, 14a, 14b).

9. Élément de thermorégulation (10) selon l'une quelconque des revendications précédentes,
**caractérisé en ce**
**qu'**à proximité de la structure de support (12, 12a, 12b) est disposé un élément de connexion (15, 16, 17, 17a, 17b) pour la fixation de l'élément de thermorégulation à un composant adjacent.

10. Batterie de traction (1), présentant une paroi de boîtier sous la forme d'un élément de thermorégulation (10) selon l'une quelconque des revendications précédentes.

11. Procédé de fabrication d'un élément de thermorégulation (10), de préférence pour l'utilisation dans une batterie de traction, comprenant les étapes suivantes
a. production ou fourniture d'une structure de support plate (12) constituée d'une tôle métallique, avec des nervures (121) et des moulures (122), les moulures (122) étant configurées sous forme de renfoncements en forme de canaux dans la structure de support (12) ;
b. insertion d'une conduite de fluide de thermorégulation tubulaire (14) dans la structure de support (12) ;
c. application d'une première surface de contact (11) avec une région de thermorégulation (100) sur les nervures (121) de la structure de support (12), de telle sorte que la structure de support (12) soit disposée à plat sur la région de thermorégulation (100) et recouvre celle-ci ; et
d. connexion par liaison de matière de la première surface de contact (11) à la première structure de support (12) ;
l'étape b. étant effectuée simultanément, ou indépendamment dans le temps, par rapport aux étapes c. et d. et les étapes c. et d. étant mises en oeuvre simultanément ou l'une après l'autre dans cet ordre,
e. la structure de support (12) étant connectée par liaison de matière sur le côté opposé à la première surface de contact (11) à une deuxième surface de contact (13).

12. Procédé selon la revendication 11,
**caractérisé en ce que**
la connexion de la structure de support (12) à la deuxième surface de contact (13) s'effectue par collage.

13. Procédé selon la revendication 11 ou 12,
**caractérisé en ce que**
la section transversale extérieure de la conduite de fluide de thermorégulation tubulaire (14) est formée de telle sorte qu'elle corresponde au moins en partie à la forme en section transversale des moulures (122) de la structure de support (12) et/ou la section transversale des moulures (122) est configurée de telle sorte qu'elle corresponde à la section transversale extérieure de la conduite de fluide de thermorégulation tubulaire (14).

14. Procédé selon la revendication 11, 12 ou 13,
**caractérisé en ce**
**qu'**à l'étape d., la connexion de la première surface de contact (11) à la première structure de support (12) s'effectue sous forme de collage.
